# EUROPÄISCHE PATENTSCHRIFT

(11) **EP 0 830 520 B1**
(45) Veröffentlichungstag und Bekanntmachung des Hinweises auf die Patenterteilung: **03.05.2000**
(21) Anmeldenummer: 95923275.2
(22) Anmeldetag: 08.06.1995
(51) Int. Cl.: F16D 65/12

(54) **BREMSSCHEIBE**
BRAKE DISK
DISQUE DE FREIN

(43) Veröffentlichungstag der Anmeldung: 25.03.1998
(73) Patentinhaber: Continental Teves AG & Co. oHG, 60488 Frankfurt (DE)
(72) Erfinder: METZEN, Hans-Peter, D-61352 Bad Homburg (DE); BAUER, Jürgen, D-65187 Wiesbaden (DE)
(86) Internationale Anmeldenummer: EP9502221
(87) Internationale Veröffentlichungsnummer: WO9641968

(56) Entgegenhaltungen:
- DE-A- 2 013 535
- DE-B- 1 247 767
- US-A- 2 926 760

## Beschreibung

Die Erfindung betrifft eine aus mehreren Teilen zusammengesetzte Bremsscheibe für eine Scheibenbremse, gemäß dem Oberbegriff des Patentanspruchs 1.

Eine gattungsgemäße Bremsscheibe ist aus der DE-AS 2 013535 bekannt. Bei der bekannten Bremsscheibe ist ein Reibring aus einem Gußmaterial mit einem schüsselförmigen Halteteil aus Blech verbunden. Das Halteteil wird an der Nabe eines Fahrzeugrades festgeschraubt und trägt den Reibring. Derartige zusammengesetzte Bremsscheiben haben den Vorteil, daß das Halteteil dünner und leichter ausgeführt sein kann als bei einer einteiligen Bremsscheibe, die vollständig gegossen ist. Außerdem treten bei gattungsgemäßen zweiteiligen Bremsscheiben unter starker Wärmeeinwirkung keine nachteiligen Verwerfungen des Reibringes auf, da das Halteteil aufgrund seiner Elastizität wärmebedingte Verformungen auffangen kann. Die bekannte Bremsscheibe erfordert jedoch noch einen erheblichen Fertigungsaufwand, denn die zur formschlüssigen Verbindung des Halteteils mit dem Reibring erforderlichen plastischen Verformungen sind nicht in einem einzigen einfachen Arbeitsgang durchführbar. Vielmehr sind für die Verbindung mehrere Arbeitsgänge erforderlich. Dies verteuert die Herstellung.

Aufgabe der Erfindung ist es, eine gattungsgemäße Bremsscheibe dahingehend zu verbessern, daß der für die Verbindung von Reibring und Halteteil erforderliche Fertigungsaufwand und die damit verbundenen Fertigungskosten verringert werden.

Die Lösung der Aufgabe ergibt sich aus dem kennzeichnenden Teil des Patentanspruchs 1. Im Prinzip besteht die Lösung darin, auf den Umfang des Halteteils verteilte Ausprägungen vorzusehen, die mittels eines von innen angreifenden Prägewerkzeugs durch eine einfache radial von innen nach außen gerichtete Bewegung des Prägewerkzeugs erzeugt werden können.

Im Gegensatz dazu benötigt man bei der bekannten Bremsscheibe gemäß DE-AS 2 013535 einen aus mehreren Arbeitsschritten zusammengesetzten Herstellungsablauf, da zunächst der Rand des schüsselförmigen Halteteils in zahlreiche Abschnitte unterteilt werden muß, die dann jeweils zuerst radial nach außen gebogen und dann in axialer Richtung gebogen werden müssen, um einen inneren Rand des Reibrings sicher zu umgreifen. Abgesehen davon ist für die beschriebene Befestigungsart noch ein Absatz im Randbereich des Halteteils erforderlich, an dem der Reibring anliegt, wenn er eingeklemmt wird. Auch die im genannten Dokument vorgeschlagene alternative Befestigung durch Schweißen ist aufwendiger und teurer als die vorliegende Erfindung.

Die erfindungsgemäße Verbindungstechnik hat also den Vorteil, besonders einfach in einem Arbeitsgang und kostengünstig ausführbar zu sein, wobei eine Nachbearbeitung der fertigen Bremsscheibe entfällt. Neben der schon erwähnten Gewichtsreduzierung und der Formstabilität des Reibrings unter Temperatureinfluß gibt es aber noch weitere Vorteile der Erfindung. So ist die Verwendung unterschiedlicher Materialien für den Reibring und das Halteteil ohne zusätzlichen Aufwand möglich. Beispielsweise kann der Reibring oder das Halteteil aus Aluminium bestehen. Desweiteren kann für das Halteteil eine besonders einfache Form ohne Hinterschneidungen gewählt werden, die eine einfache und kostengünstige Fertigung des rohen Halteteils insbesondere in einem einzigen Prägevorgang erlauben. Die erfindungsgemäßen Ausprägungen zur Befestigung des Reibringes werden erst bei der Verbindung des Halteteils mit dem Reibring eingeformt. Es sind also keine zusätzlichen vorbereitenden Arbeitsschritte nötig. Schließlich kann eine verbrauchte Bremsscheibe auf einfachste Weise in ihre beiden Teile zerlegt werden, um die Materialien von Reibring und Halteteil getrennt ihrer Wiederverwertung zuzuführen.

In einer bevorzugten Ausführungsform ist das Halteteil an seinem äußeren Rand umgebogen, so daß ein umlaufender radial vorstehender Flansch entsteht. Der radial innere Randbereich des Reibrings kann in einer Axialrichtung an diesen Flansch des Halteteils anliegen, so daß die erfindungsgemäßen Ausprägungen nur noch das Abgleiten des Reibrings vom Halteteil in der anderen Axialrichtung formschlüssig verhindern müssen. Dabei sind die Ausprägungen im Abstand zu dem Flansch angeordnet und nockenförmig ausgebildet, so daß eine im Bereich einer inneren Kante des Reibrings ansteigende und an der Kante anliegende schräge Flanke entsteht, die ein Verschieben des Reibrings in die andere Axialrichtung verhindert und gleichzeitig eine spielfreie feste aber trotzdem elastische Verbindung zwischen Halteteil und Reibring gewährleistet.

In einer Weiterbildung der Erfindung gemäß der ersten Ausführungsform können zusätzlich eine oder mehrere radial nach außen vorstehende Sicherungsnasen vorgesehen sein, die jeweils in eine zugehörige Ausnehmung des Reibrings eingreifen und durch Formschluß ein Verdrehen des Reibrings auf dem Halteteil verhindern. Diese Maßnahme stellt sicher, daß bei einer Notbremsung auftretende hohe Drehmomente übertragen werden können, ohne daß die Festigkeit der Verbindung gefährdet wäre.

In einer zweiten Ausführungsform der Erfindung ist das Halteteil an seinem Endbereich wiederum mit einem umlaufenden, radial vorstehenden Flansch versehen, an dem der radial innere Randbereich des Reibrings anliegt und gegen Verschieben in der einen Axialrichtung gesichert ist. Darüberhinaus geht aber der radial innere Randbereich des Reibrings in einen umlaufenden Kragen über, der in Axialrichtung absteht, also im wesentlichen rechtwinklig zur Reibfläche des Reibrings angeordnet ist. Dieser Kragen umfaßt die äußere Umfangsfläche des Halteteils, an der er anliegt. Die Verbindung zwischen Halteteil und Reibring erfolgt im Prinzip auf dieselbe Weise wie im ersten Ausführungsbeispiel, indem radial von innen nach außen in das Halteteil Ausprägungen eingeformt werden, die formschlüssig in zugehöriger Ausprägungen des Kragens am Reibring eingreifen. Dabei entsteht eine formschlüssige und reibschlüssige Verbindung. Zweckmäßigerweise können die Ausprägungen des Kragens am Reibring gleichzeitig mit den Ausprägungen des Halteteils eingeformt werden.

In einer weiteren Ausführungsform der Erfindung sind die Ausprägungen des Halteteils kraterförmig ausgestaltet. Sie greifen in vorzugsweise runde Vertiegungen im radial inneren Randbereich des Reibrings ein, wodurch ein sicherer Formschluß sowohl in axialer Richtung als auch zur sicheren Übertragung großer Drehmomente in Umfangsrichtung entsteht. Bei dieser Ausführungsform ist es zweckmäßig, wenn der Reibring mit radial nach innen vorspringenden, in Umfangsrichtung in gleichmäßigen Abständen angeordneten Füßen versehen ist, in denen Bohrungen zum Eingriff des Ausprägungen des Halteteils eingebracht sind.

Bei sogenannten belüfteten Bremsscheiben ist der Reibring mit Hohlräumen für den Durchtritt von Kühlluft versehen. Bei Verwendung eines solchen Reibrings wird eine weitere vorteilhafte Ausführungsform der Erfindung empfohlen, bei der die Ausprägungen des Halteteils in die Hohlräume des Reibrings eingreifen. Insbesondere bei den üblichen Ausführungsformen derartiger Reibringe mit zwei Teilringen, die durch radiale Stege miteinander verbunden sind, ist diese Ausführungsform besonders zweckmäßig, da die Ausprägungen des Halteteils in Bezug auf die Drehrichtung formschlüssig zwischen je zwei Stege eingreifen können und in Bezug auf die Axialrichtung formschlüssig zwischen den beiden Reibringhälften eingeklemmt werden können. In diesem Fall kann zwar auf einen wie im ersten beschriebenen Ausführungsbeispiel vorgesehenen umlaufenden, radial vorstehenden Flansch des Halteteils im Prinzip verzichtet werden, jedoch wird ein solcher Flansch empfohlen, um eine noch stabilere Anlage am Reibring zu gewährleisten.

Ausführungsbeispiele der Erfindung werden nachfolgend anhand der Zeichnungen näher erläutert.

Es zeigen:
- Figur 1: eine teilweise aufgebrochene perspektivische Darstellung einer erfindungsgemäßen Bremsscheibe,
- Figur 2: einen radialen Schnitt der Bremsscheibe von Figur 1 im Bereich einer Ausprägung,
- Figur 3: eine Ansicht wie Figur 1 der Bremsscheibe mit einer zusätzlichen Sicherungsnase,
- Figur 4: einen radialen Schnitt der Bremsscheibe von Figur 3 im Bereich der Sicherungsnase,
- Figur 5: eine teilweise aufgebrochene perspektivische Darstellung einer erfindungsgemäßen Bremsscheibe in einer zweiten Ausführungsform,
- Figur 6: einen radialen Schnitt im Bereich der Ausprägung der Bremsscheibe von Figur 5,

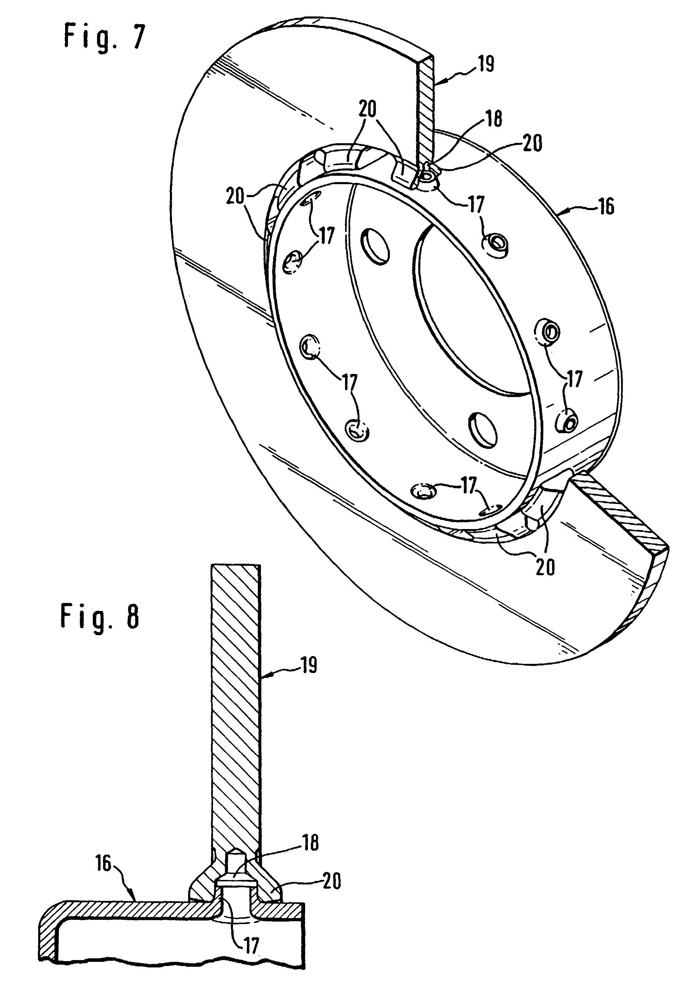

- Figur 7: eine teilweise aufgebrochene perspektivische Darstellung einer Bremsscheibe in einer dritten Ausführungsform,
- Figur 8: einen Schnitt im Bereich der Ausprägung durch die Bremsscheibe von Figur 7,
- Figur 9: eine teilweise aufgebrochene perspektivische Darstellung einer Bremsscheibe in einer vierten Ausführungsform,
- Figur 10: einen radialen Schnitt durch eine Bremsscheibe ähnlich der von Figur 9 in einer weiteren Variante.

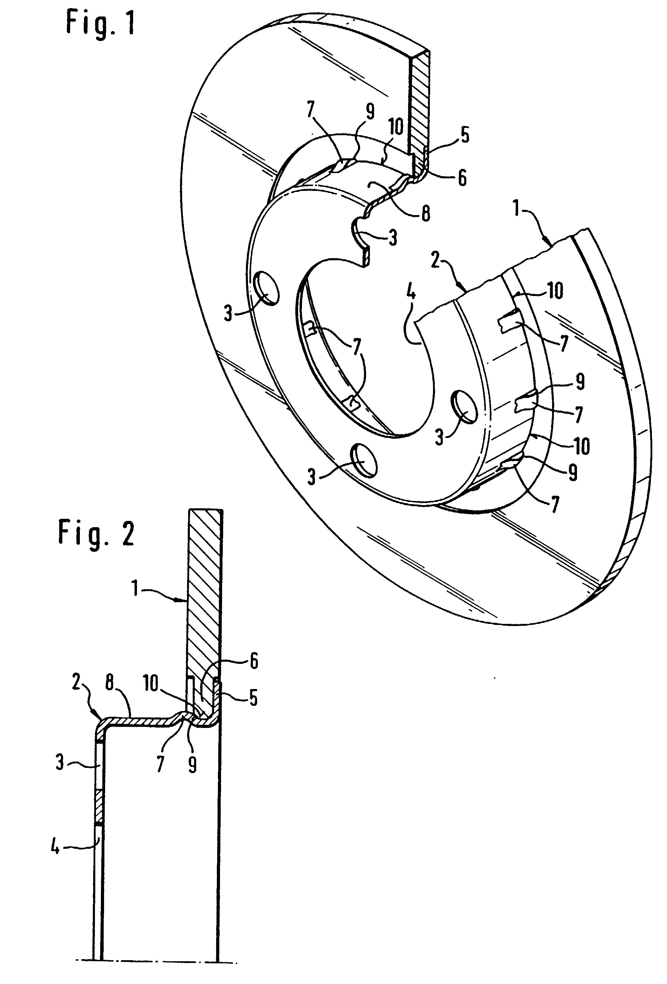

Die in Figur 1 dargestellte Bremsscheibe besteht aus einem gegossenen Reibring 1 und einem aus Blech geformten, schüsselförmigen Halteteil 2, das zur Befestigung an einer Radnabe eines Fahrzeugs mit Befestigungslöchern 3 und einem zentralen Durchbruch 4 für den Durchgang der Radnabe versehen ist. Das Halteteil 2 ist an seinem äußeren Endbereich umgebogen, so daß ein umlaufender, radial vorstehender Flansch 5 entsteht. Der radial innere Randbereich 6 des Reibrings 1 liegt an dem Flansch 5 an und sichert den Reibring 1 gegen eine Verschiebung in der einen Axialrichtung auf dem Halteteil 2. Das Halteteil 2 besitzt eine Vielzahl gleichmäßig über seinen Umfang verteilte Ausprägungen 7, die radial aus der Umfangsfläche 8 hervorstehen und im axialen Abstand zum Flansch 5 angeordnet sind. Die Ausprägungen 7 sind nockenförmig und liegen mit ihrer einen schrägen Flanke 9 an einer inneren Kante 10 des Reibrings 1 an, um ein Verschieben des Reibrings 1 in die andere Axialrichtung zu verhindern.

Zur Montage der Bremsscheibe wird der Reibring 1 auf das Halteteil 2 aufgeschoben, bis er an dem Flansch 5 anliegt. Anschließend werden die Ausprägungen 7 durch ein Prägewerkzeug, das in den Innenraum des schüsselförmigen Halteteils 2 eingeführt wird, in einem radial von innen nach außen gerichteten einfachen Prägevorgang ausgebildet. Dabei wird gleichzeitig der Reibring 1 am Halteteil 2 befestigt.

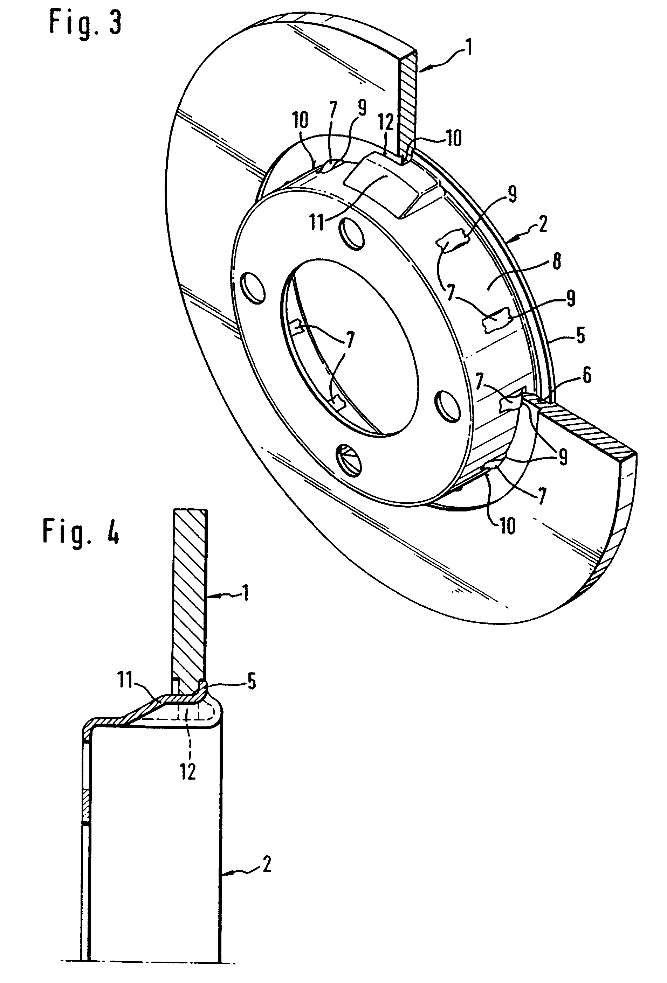

Die in Figur 3 dargestellte Variante der erfindungsgemäßen Bremsscheibe weist zusätzlich eine Sicherungsnase 11 auf, die ebenfalls aus der Umfangsfläche 8 des Halteteils 2 radial nach außen vorsteht. Die Sicherungsnase 11 greift in eine Ausnehmung 12 des Reibrings 1 ein, um einen Formschluß in Umfangsrichtung (Drehrichtung) zu erzeugen und die Übertragung großer Drehmomente zu ermöglichen.

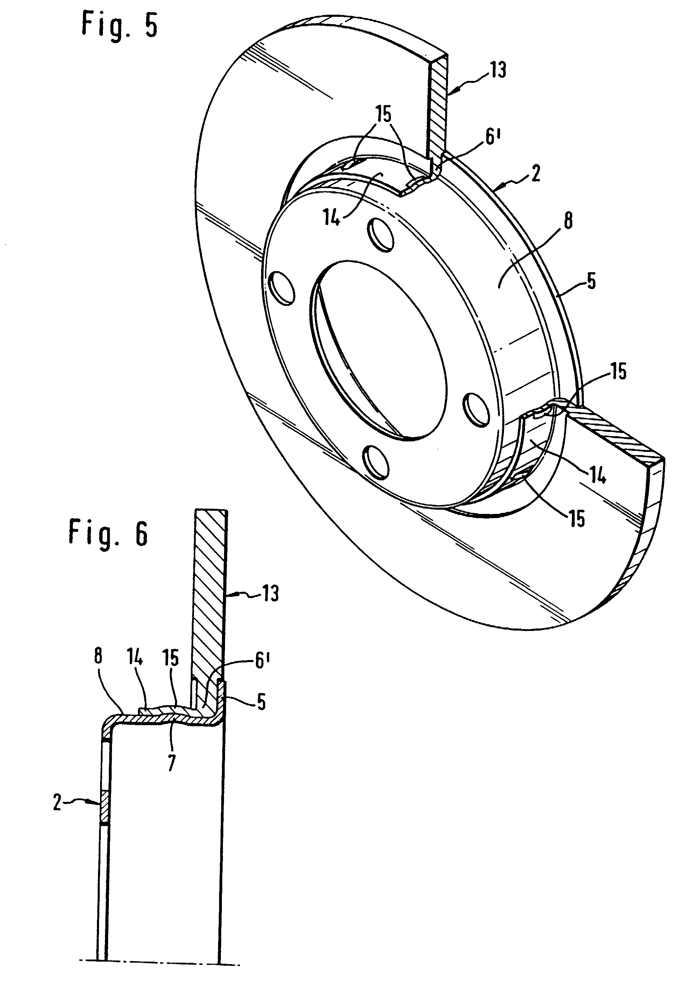

Bei der in Figur 5 dargestellten Ausführungsform entspricht das Halteteil 2 im wesentlichen dem ersten Ausführungsbeispiel, während der Reibring 13 zusätzlich mit einem umlaufenden, in Axialrichtung abstehenden Kragen 14 versehen ist, der an der Umfangsfläche 8 des Halteteils 2 anliegt. Die Ausprägungen 7 des Halteteils 2 (Figur 6) greifen formschlüssig in zugehörige Ausprägungen 15 des Kragens 14 ein.

In einer anderen Ausführungsform ist ein modifiziertes Halteteil 16 mit kraterförmigen Ausprägungen 17 versehen, die in runde Vertiefungen 18, die im radial inneren Randbereich des modifizierten Reibrings 19 ausgebildet sind, formschlüssig eingreifen. Dabei ist der radial innere Randbereich des Reibrings 19 mit radial nach innen ragenden Füßen 20 versehen, die in gleichmäßigen Abständen über den Reibring 19 verteilt und jeweils mit einer Vertiefung 18 versehen sind.

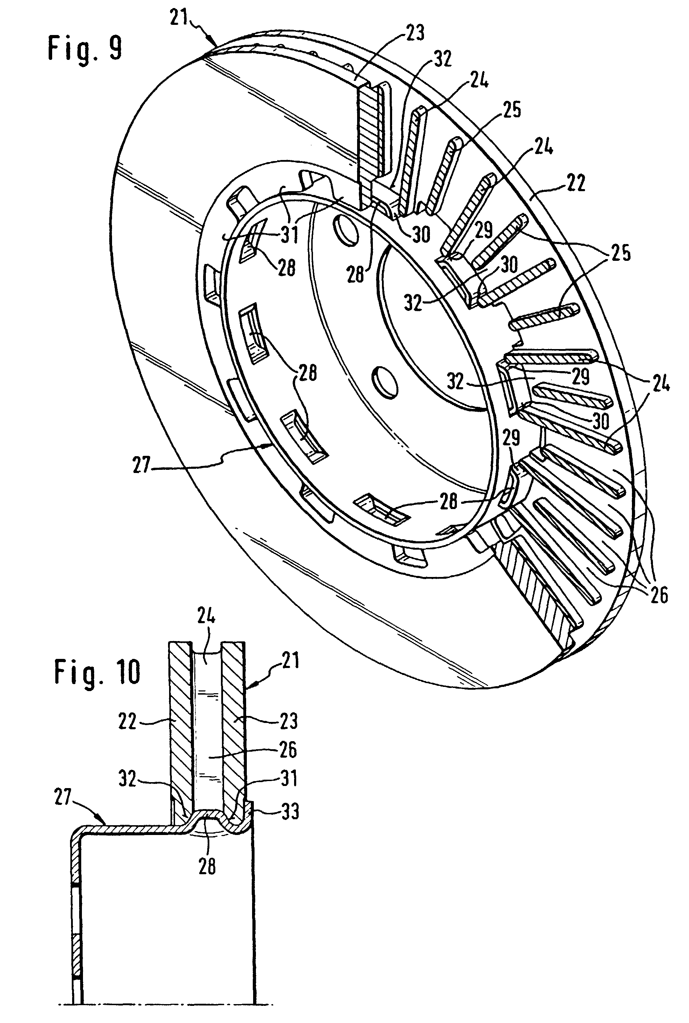

Bei der in Figur 9 dargestellten Ausführungsform besteht der modifizierte Reibring 21 aus zwei Teilringen 22, 23, die durch Stege 24, 25 miteinander verbunden sind. Zwischen den Stegen 24, 25 sind Hohlräume 26 für den Durchtritt von Kühlluft vorgesehen. Ein modifiziertes Halteteil 27 ist wiederum mit Ausprägungen 28 versehen, die vorzugsweise nockenförmig ausgebildet, aber hier in Umfangsrichtung ausgerichtet sind. Die Ausprägungen 28 greifen in die Hohlräume 26 ein und liegen mit ihren Flanken 29, 30 in Bezug auf die Drehrichtung formschlüssig an den Stegen 24 an. Die Ausprägungen 28 sind außerdem mit gegenüberliegenden Wandabschnitten 31, 32 der Teilringe 22, 23 in Bezug auf die Axialrichtung formschlüssig verbunden.

Schließlich kann auch, wie in Figur 10 dargestellt, das modifizierte Halteteil zusätzlich mit einem umlaufenden, radial vorstehenden Flansch 33 zur axialen Anlage am Reibring 21 versehen sein.

## Patentansprüche

1. Bremsscheibe bestehend aus einem Reibring (1,13,19,21) und einem aus Blech geformten schüsselförmigen Halteteil (2,16,27), das durch plastische Verformungen formschlüssig mit dem Reibring (1,13,19,21) verbunden ist, **dadurch gekennzeichnet,** daß das Halteteil (2,16,27) mit über seinen Umfang verteilten Ausprägungen (7,17,28) versehen ist, die mit axialem Abstand zum äußeren Randbereich des Halteteiles (2,16,27) aus seiner Umfangsfläche (8) radial nach außen hervorstehen und durch einen einfachen, radial nach außen gerichteten Prägevorgang in das Halteteil (2,16,27) einformbar sind, wobei die zur Befestigung des Reibringes (1,13,19,21) am Halteteil (2,16,27) bestimmten Ausprägungen (7,17,28) erst bei der Verbindung des Reibringes (1,13,19,21) mit dem Halteteil (2,16,27) eingeformt werden.

2. Bremsscheibe nach Anspruch 1, **dadurch gekennzeichnet,** daß das Halteteil (2) an seinem äußeren Randbereich mit einem umlaufenden, radial vorstehenden Flansch (5) versehen ist, an den der radial innere Randbereich (6) des Reibrings (1) anliegt und gegen Verschieben in der einen Axialrichtung gesichert ist, daß die Ausprägungen (7) im axialen Abstand zum Flansch (5) angeordnet und nockenförmig ausgebildet sind, so daß eine im Bereich einer inneren Kante (10) des Reibrings (1) ansteigende und an der Kante (10) anliegende schräge Flanke (9) einer Ausprägung (7) ein Verschieben des Reibrings (1) in die andere Axialrichtung verhindert.

3. Bremsscheibe nach Anspruch 2, **dadurch gekennzeichnet,** daß das Halteteil (2) zumindest eine weitere radial nach außen vorstehende Sicherungsnase (11) aufweist, die in eine Ausnehmung (12) des Reibrings (1) eingreift und durch Formschluß ein Verdrehen des Reibrings (1) auf dem Halteteil (2) verhindert.

4. Bremsscheibe nach Anspruch 3, **dadurch gekennzeichnet,** daß drei über den Umfang des Halteteils (2) verteilte Sicherungsnasen (11) vorgesehen sind.

5. Bremsscheibe nach Anspruch 1, **dadurch gekennzeichnet,** daß das Halteteil (2) an seinem Randbereich mit einem umlaufenden, radial vorstehenden Flansch (5) versehen ist, an dem der radial innere Randbereich (6') des Reibrings (13) anliegt, daß der radial innere Randbereich (6') des Reibrings (13) einen umlaufenden, in Axialrichtung abstehenden Kragen (14) aufweist, der an der Umfangsfläche (8) des Halteteils (2) anliegt, und daß die Ausprägungen (7) des Halteteils (2) formschlüssig in zugehörige Ausprägungen (15) des Kragens (14) am Reibring (13) eingreifen.

6. Bremsscheibe nach Anspruch 1, **dadurch gekennzeichnet,** daß die Ausprägungen (17) des Halteteils (16) kraterförmig ausgestaltet sind und in radiale, vorzugsweise runde Vertiefungen (18) im radial inneren Randbereich des Reibrings (19) eingreifen.

7. Bremsscheibe nach Anspruch 1, **dadurch gekennzeichnet,** daß der Reibring (21) mit Hohlräumen (26) für den Durchtritt von Kühlluft versehen ist und daß die Ausprägungen (28) des Halteteils (27) in die Hohlräume (26) eingreifen.

8. Bremsscheibe nach Anspruch 7, **dadurch gekennzeichnet,** daß die Hohlräume (26) durch Stege (24) getrennt sind und daß die Ausprägungen (28) in Bezug auf die Drehrichtung formschlüssig zwischen je zwei Stege (24) eingreifen.

9. Bremsscheibe nach Anspruch 8, **dadurch gekennzeichnet**, daß die Ausprägungen (28) mit gegenüberliegenden Wandabschnitten (31,32) des Reibrings (21) in Bezug auf die Axialrichtung formschlüssig verbunden sind.

10. Bremsscheibe nach einem der Ansprüche 7 bis 9, **dadurch gekennzeichnet**, daß das Halteteil (27) an seinem äußeren Randbereich mit einem umlaufenden, radial vorstehenden Flansch (33) zur axialen Anlage am Reibring (21) versehen ist.

## Claims

1. Brake disk consisting of a friction ring (1, 13, 19, 21) and a bowl-shaped holding part (2, 16, 27) that is connected to the friction ring (1, 13, 19, 21) in a form-fitting manner by plastic deformation, **characterized in that** the holding part (2, 16, 27) is provided with stamped tabs (7, 17, 28) that are distributed over its circumference at an axial distance from the outward edge area of the holding part (2, 16, 27) and project radially outward from its peripheral face (8), and can be shaped in the holding part (2, 16, 27) in a simple, radially outward directed stamping operation, wherein the stamped tabs (7, 17, 28) which are intended for attachment of the friction ring (1, 13, 19, 21) to the holding part (2, 16, 27) are shaped only when the friction ring (1, 13, 19, 21) is connected to the holding part (2, 16, 27).

2. Brake disk according to claim 1, **characterized in that** the holding part (2) is provided with a peripheral flange (5) that projects radially on its outer end area so that the radially inside edge area (6) of the friction ring (1) comes to rest against it and is secured to prevent displacement in one axial direction, in that the stamped tabs (7) are arranged at an axial distance from the flange (5) and are designed in a cam shape, so that one inclined flank (9) of a stamped tab (7) that rises in the area of an inside edge (10) of the friction ring (1) and is in abutment with the edge (10) prevents displacement of the friction ring (1) in the other axial direction.

3. Brake disk according to claim 2, **characterized in that** the holding part (2) has at least one additional securing nose (11) that projects radially outward and engages in a recess (12) in the friction ring (1) and prevents the friction ring (1) from twisting on the holding part (2) by a form-fitting connection.

4. Brake disk according to claim 3, **characterized in that** three securing noses (11) distributed over the circumference of the holding part (2) are provided.

5. Brake disk according to claim 1, **characterized in that** the holding part (2) is provided in its end area with a peripheral flange (5) which projects radially outward and with which the radially inside edge area (6') of the friction ring (13) is in abutment, in that the radially inside edge area (61) of the friction ring (13) has a peripheral collar (14) which projects in the axial direction and is in abutment with the peripheral face (8) of the holding part (2), and in that the stamped tabs (7) of the holding part (2) engage in associated stamped recesses (15) in the collar (14) on the friction ring (13) in a form-fitting manner.

6. Brake disk according to claim 1, **characterized in that** the stamped tabs (17) in the holding part (16) have a craterlike configuration and engage in radial recesses (18), preferably round, in the radially inside edge area of the friction ring (19).

7. Brake disk according to claim 1, **characterized in that** the friction ring (21) is provided with hollow spaces (26) for the passage of cooling air, and in that the stamped tabs (28) in the holding part (27) engage in the hollow spaces (26).

8. Brake disk according to claim 7, **characterized in that** the hollow spaces (26) are separated by webs (24), and in that the stamped tabs (28) engage between two webs (24) each in a form-fitting manner with respect to the direction of rotation.

9. Brake disk according to claim 8, **characterized in that** the stamped tabs (28) are connected to the opposing wall sections (31, 32) of the friction ring (21) in a form-fitting manner with respect to the axial direction.

10. Brake disk according to any one of claims 7 through 9, **characterized in that** the holding part (27) is provided on its outer end area with a peripheral flange (33) that projects radially outward for axial abutment with the friction ring (21).

## Revendications

1. Disque de frein constitué d'un anneau de friction (1, 13, 19, 21) et d'une pièce de retenue (2, 16, 27) en forme d'auge constituée de tôle, qui est raccordée à l'anneau de friction (1, 13, 19, 21) avec adaptation de formes par des déformations plastiques, caractérisé en ce que la pièce de retenue (2, 16, 27) est pourvue de parties estampées (7, 17, 28) réparties sur sa périphérie, qui font saillie radialement vers l'extérieur de sa surface périphérique (8) à distance axiale de la zone de bord externe de la pièce de retenue (2, 16, 27) et peuvent être façonnées dans la pièce de retenue (2, 16, 27) par une simple opération d'estampage dirigée radialement vers l'extérieur, les parties estampées (7, 17, 28) destinées à fixer l'anneau de friction (1, 13, 19, 21) sur la pièce de retenue (2, 16, 27) n'étant façonnées que lors de la liaison de l'anneau de friction (1, 13, 19, 21) avec la pièce de retenue (2, 16, 27).

2. Disque de frein selon la revendication 1, caractérisé en ce que la pièce de retenue (2) est pourvue sur sa zone de bord externe d'une bride périphérique (5) faisant saillie radialement, sur laquelle la zone de bord radiale interne (6) de l'anneau de friction (1) s'applique et est bloquée contre tout déplacement dans le premier sens axial, en ce que les parties estampées (7) sont agencées à distance axiale de la bride (5) et se présentent en forme de saillies, de telle sorte qu'un flanc incliné (9) d'une partie estampée (7) montant dans la zone d'un bord interne (10) de l'anneau de friction (1) et s'appliquant sur le bord (10) empêche un déplacement de l'anneau de friction (1) dans l'autre sens axial.

3. Disque de frein selon la revendication 2, caractérisé en ce que la pièce de retenue (2) présente au moins un autre ressaut de blocage (11) faisant saille radialement vers l'extérieur, qui s'engage dans une cavité (12) de l'anneau de friction (1) et empêche, par adaptation de formes, une torsion de l'anneau de friction (1) sur la pièce de retenue (2).

4. Disque de frein selon la revendication 3, caractérisé en ce qu'il est prévu trois ressauts de blocage (11) répartis sur la périphérie de la pièce de retenue (2).

5. Disque de frein selon la revendication 1, caractérisé en ce que la pièce de retenue (2) est pourvue sur sa zone de bord d'une bride périphérique (5) faisant saillie radialement, sur laquelle la zone de bord radiale interne (6') de l'anneau de friction (13) s'applique, en ce que la zone de bord radiale interne (6') de l'anneau de friction (13) présente un collet périphérique (14) faisant saillie dans la direction axiale, qui s'applique sur la surface périphérique (8) de la pièce de retenue (2), et en ce que les parties estampées (7) de la pièce de retenue (2) s'engagent avec adaptation de formes dans des parties estampées correspondantes (15) du collet (14) sur l'anneau de friction (13).

6. Disque de frein selon la revendication 1, caractérisé en ce que les parties estampées (17) de la pièce de retenue (16) se présentent en forme de cratères et s'engagent dans des dépressions radiales (18), de préférence rondes, ménagées dans la zone de bord radiale interne de l'anneau de friction (19).

7. Disque de frein selon la revendication 1, caractérisé en ce que l'anneau de friction (21) est pourvu de cavités (26) pour le passage d'air froid et en ce que les parties estampées (28) de la pièce de retenue (27) s'engagent dans les cavités (26).

8. Disque de frein selon la revendication 7, caractérisé en ce que les cavités (26) sont séparées par des nervures (24) et en ce que les parties estampées (28) s'engagent entre deux nervures respectives (24) avec adaptation de formes par rapport à la direction de rotation.

9. Disque de frein selon la revendication 8, caractérisé en ce que les parties estampées (28) sont raccordées à des sections de paroi opposées (31, 32) de l'anneau de friction (21) avec adaptation de formes par rapport à la direction axiale.

10. Disque de frein selon l'une quelconque des revendications 7 à 9, caractérisé en ce que la pièce de retenue (27) est pourvue sur sa zone de bord externe d'un flanc périphérique (33) faisant saillie radialement pour assurer un appui axial sur l'anneau de friction (21).
